# FASCICULE DE BREVET EUROPEEN

(11) **EP 0 666 406 B1**
(45) Date de publication et mention de la délivrance du brevet: **02.05.1997**
(21) Numéro de dépôt: 95400203.6
(22) Date de dépôt: 01.02.1995
(51) Int. Cl.: F01D 5/18

(54) **Aube fixe ou mobile refroidie de turbine**
Gekühltes Turbinenschaufel
Cooled turbine blade

(30) Priorité: 03.02.1994 FR 9401194
(43) Date de publication de la demande: 09.08.1995
(73) Titulaire: SOCIETE NATIONALE D'ETUDE ET DE CONSTRUCTION DE MOTEURS D'AVIATION Snecma, F-75015 Paris (FR)
(72) Inventeur: Coudray, Xavier Gérard André, F-77300 Fontainebleau (FR); Pichon, Philippe Marc Pierre, F-91330 Yerres (FR)

(56) Documents cités:
- EP-A- 0 330 601
- EP-A- 0 375 175
- EP-A- 0 562 944
- EP-A- 0 641 917
- FR-A- 2 569 225
- GB-A- 2 202 907

## Description

La présente invention concerne les aubes fixes ou mobiles de turbine, destinées notamment à un turboréacteur, comprenant au moins une cavité interne parcourue par de l'air de refroidissement et une paroi externe délimitant un bord d'attaque, une face d'intrados et une face d'extrados de l'aube et comportant des rangées d'orifices d'évacuation de l'air de refroidissement.

Des aubes de ce type sont bien connues et sont décrites par exemple par EP-A-0562944 qui prévoit notamment de disposer sur le bord d'attaque de l'aube, de part et d'autre de la ligne centrale dudit bord, au moins une rangée d'orifices, répartis sur la hauteur de l'aube et disposés en épi, chaque orifice ayant une section oblongue et étant incliné de manière que sa lisière intérieure est plus proche du pied d'aube que sa lisière extérieure. Lesdits orifices communiquent avec une première cavité interne longitudinale de l'aube alimentée en fluide réfrigérant. Selon un mode préféré de réalisation, ces orifices constituent une première double rangée et deux deuxièmes rangées d'orifices communiquant avec ladite première cavité sont disposées de part et d'autre du bord d'attaque de l'aube, chacune au-delà d'une des premières rangées.

Malgré ces améliorations successives, l'augmentation constante de la température à l'entrée des turbines de turbomachine, et notamment dans les application aux moteurs aéronautiques, nécessite de rechercher un refroidissement optimal des pièces constitutives de la turbine, dans un double souci de durée de vie des pièces et d'optimisation des performances. Le bord d'attaque des aubages de turbine, distributeurs à aubes fixes et roues mobiles aubées, constitue notamment une zone critique car elle est directement exposée à la totalité des gaz à leur température la plus élevée et la création d'un film d'air froid de refroidissement à cet endroit n'est guère possible.

L'invention vise par conséquent à obtenir une amélioration du refroidissement pour une aube de turbine du type qui vient d'être décrit ci-dessus, en conservant les autres caractéristiques connues en soi propres à assurer les conditions d'utilisation requises.

Une aube de turbine répondant à ces conditions comprend au moins une deuxième rangée d'orifices ménagée dans la zone du bord d'attaque de l'aube, parallèle à la ligne centrale du bord d'attaque, et est caractérisée en ce que chaque orifice de deuxième rangée a une première extrémité en communication avec un orifice de première rangée, la communication étant disposée entre les deux extrémités de l'orifice de première rangée, et a une deuxième extrémité débouchant sur la surface externe de l'aube, les orifices de première et deuxième rangées étant ainsi respectivement sécants deux à deux de manière que l'air de refroidissement prélevé dans la première cavité interne longitudinale de l'aube alimente les orifices de première rangée et de l'air prélevé dans lesdits orifices de première rangée circule dans les orifices de deuxième rangée.

Avantageusement, dans une première application de l'invention à un aubage fixe de distributeur de turbine, deux deuxièmes rangées d'orifices sécants sont disposées de part et d'autre de deux premières rangées d'orifices, les orifices étant sécants par groupe de deux, l'un d'une deuxième rangée et l'autre d'une première rangée, de part et d'autre de la ligne centrale du bord d'attaque, respectivement.

Avantageusement, dans une deuxième application de l'invention à un aubage mobile de roue de turbine, une unique première rangée d'orifices est ménagée sur le bord d'attaque, le long de la ligne centrale et suivant les applications, soit une unique deuxième rangée d'orifices est ménagée du côté extrados dans la zone de bord d'attaque, chaque orifice de la deuxième rangée étant sécant avec un orifice de la première rangée, soit deux deuxièmes rangées d'orifices sécants sont ménagées de part et d'autre de la première rangée d'orifices, chaque orifice de première rangée alimentant ainsi en air de refroidissement provenant de la première cavité interne longitudinale de l'aube deux orifices sécants, un orifice sur chaque deuxième rangée respectivement.

D'autres caractéristiques et avantages de l'invention seront mieux compris à la lecture de la description qui va suivre de deux modes de réalisation de l'invention, en référence aux dessins annexés sur lesquels :
- La figure 1 est une vue schématique suivant une coupe transversale par un plan passant par la ligne II II de la figure 2, de la zone de bord d'attaque d'une aube refroidie de distributeur fixe de turbine, conforme à un premier mode de réalisation de l'invention ;
- la figure 2 est une vue suivant flèche F1 de la figure 1 ;
- la figure 3 est une vue schématique, suivant une coupe transversale analogue à celle de la figure 1, de la zone de bord d'attaque d'une aube refroidie de roue mobile de turbine, conforme à un deuxième mode de réalisation de l'invention ;
- la figure 4 est une vue schématique, suivant une coupe transversale analogue à celles des figures 1 et 3, de la zone de bord d'attaque d'une aube refroidie de roue mobile de turbine, selon une variante du deuxième mode de réalisation de l'invention ;
- la figure 5 est une vue suivant flèche F2 de la figure 4, analogue à celle de la figure 2.

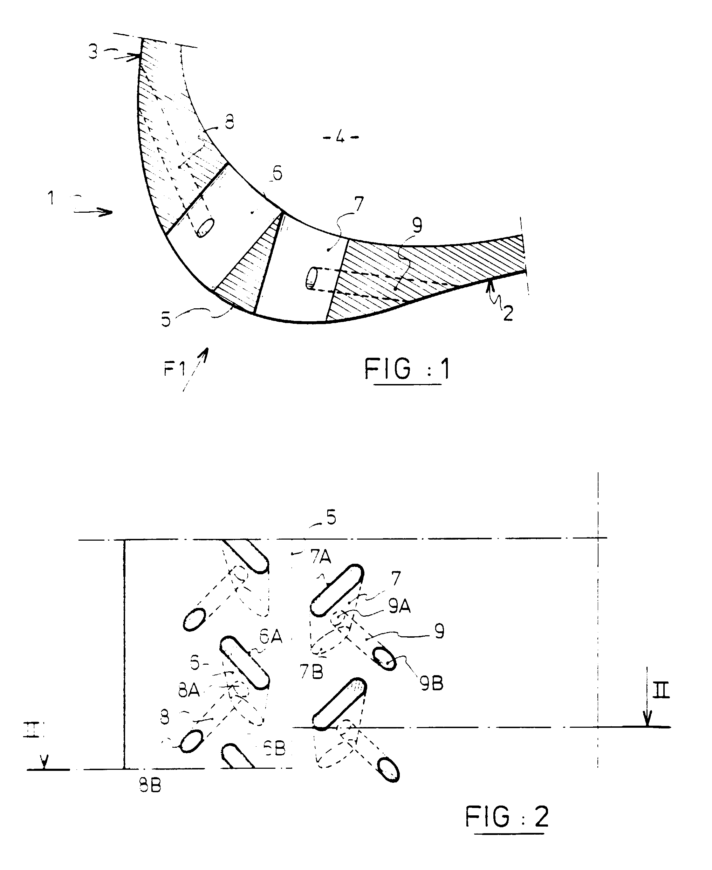

Pour une description plus complète d'une aube de turbine refroidie, on se reportera à EP-A-0562944 également déposé par la demanderesse et qui détaille les caractéristiques générales et les conditions d'utilisation d'une telle aube. Les vues partielles des figures 1 et 2 montrent ainsi une aube 1 faisant application de l'invention à un distributeur fixe de turbine dans un premier mode de réalisation. Seule la zone de bord d'attaque de l'aube 1, formant la transition entre la face 2 d'intrados et la face 3 d'extrados de l'aube 1 a été représentée sur les dessins. Comme il est connu, notamment par EP-A- 0562944, l'aube 1 est évidée et comporte des cavités longitudinales internes ménagées pour une circulation d'air de refroidissement, selon des techniques connues en soi, une alimentation étant notamment prévue à l'une des extrémités de l'aube. Une première cavité longitudinale interne 4 est ainsi ménagée à l'arrière du bord d'attaque de l'aube 1. On désigne par 5 la ligne géométrique théorique le long du bord d'attaque de l'aube 1 ou ligne centrale où les flux de gaz s'écoulant d'une part le long de la surface d'intrados 2 de l'aube 1 et d'autre part le long de la surface d'extrados 3 de l'aube 1 se séparent, au niveau d'un point d'arrêt. Comme il est connu généralement et notamment par EP-A- 0562944, deux premières rangées de fentes ou orifices 6 et 7, régulièrement réparties d'une extrémité à l'autre sur la hauteur de l'aube 1 et de part et d'autre de la ligne centrale 5, sont ménagées sur le bord d'attaque de l'aube, traversant la paroi externe de l'aube. Comme cela est visible sur la figure 2, chaque première rangée d'orifices 6 ou 7 s'étend sensiblement parallèle à ladite ligne centrale 5. Dans l'exemple représenté sur les dessins, les orifices 6 et 7 présentent une section en forme de fentes oblongues. Chaque orifice 6 ou 7 présente une double orientation. En vue de face du bord d'attaque, les grands axes des sections des orifices correspondants 6 et 7, de part et d'autre de la ligne centrale 5 sont disposés en V. Les lisières extérieures 6A et 7A des orifices 6 et 7 forment ainsi une disposition en épi. En outre, par rapport à la hauteur de l'aube, la lisière intérieure 6B ou 7B de chaque orifice se trouve à un niveau inférieur à celui de la lisière extérieure 6A et 7A respectivement. Dans la réalisation représentée, la section transversale de chaque orifice 6 ou 7 est croissante de la lisière intérieure 6B ou 7B jusqu'à la lisière extérieure 6A ou 7A.

A ces dispositions déjà connues, des dispositions complémentaires remarquables, conformes à l'invention, sont adjointes. Dans l'épaisseur du bord d'attaque de l'aube 1, des orifices 8 et 9 sont ménagés, formant deux deuxièmes rangées, de part d'autre desdites premières rangées d'orifices 6 et 7. Chaque orifice 8 est sécant avec un orifice 6 à une première extrémité interne 8A et débouche sur la face externe d'extrados 3 de l'aube 1 à son autre extrémité externe 8B. De manière analogue, chaque orifice 9 est sécant avec un orifice 7 à une première extrémité interne 9A et débouche sur la face externe d'intrados 2 de l'aube 1 à son autre extrémité externe 9B.

Le fonctionnement général du refroidissement de l'aube 1 reste conforme à ce qui est décrit par EP-A-0562944 et notamment l'air de refroidissement circulant dans la première cavité longitudinale interne 4 de l'aube 1 traverse les orifices 6 et 7 du bord d'attaque de l'aube et compte-tenu de l'orientation des jets obtenus crée un film de refroidissement sur la paroi externe de l'aube.

De manière remarquable et conforme à l'invention, un effet complémentaire est obtenu grâce à la disposition des orifices sécants 8 et 9. En effet, un débit d'air de refroidissement est prélevé sur le débit des premières rangées d'orifices 6 et 7 pour alimenter les orifices 8 et 9 des deuxièmes rangées. Grâce à la disposition inclinée des orifices sécants 8 et 9 dans l'épaisseur de la paroi d'aube dans la zone de bord d'attaque, la surface d'échange dans la paroi est fortement augmentée et il en résulte une amélioration du pompage thermique. La longueur des orifices 8 et 9 est supérieure à celle d'orifices qui seraient disposés perpendiculairement à la paroi d'aube. La disposition inclinée dans la paroi permet également aux orifices sécants 8 et 9 de venir tangenter la surface externe de l'aube sur une grande longueur et très près de cette surface et le pompage thermique qui en résulte s'exerce ainsi plus près de la paroi externe de l'aube. L'angle d'éjection de l'air de refroidissement à la sortie des orifices sécants 8 et 9 est faible par rapport à la tangente à la paroi externe de l'aube. Il en résulte une augmentation de l'efficacité du film d'air de refroidissement émis à la surface externe de l'aube 1 ainsi qu'une réduction des pertes aérodynamiques de mélange induites par ces émissions.

Il est en outre remarquable que les améliorations du refroidissement de l'aube 1 sont obtenues sans augmentation globale notable du débit d'air de refroidissement, ce qui évite de pénaliser les performances aérodynamiques et le bilan énergétique global de la turbomachine.

En fonction des applications et des résultats obtenus dans les conditions particulières de fonctionnement, certains aménagements particuliers peuvent être apportés. Les orifices sécants 8 et 9 peuvent notamment présenter une section circulaire ou oblongue, cette section pouvant être constante ou, dans d'autre cas, croissante à partir de la lisière intérieure 8A, 9A vers la lisière extérieure 8B, 9B. Chaque orifice sécant 8 ou 9 peut en outre présenter un angle d'inclinaison par rapport à la ligne centrale 5 du bord d'attaque.

Dans tous les cas les dispositions prévues pour les premières rangées d'orifices 6 et 7 et les deuxièmes rangées d'orifices sécants 8 et 9 dans la zone du bord d'attaque de l'aube 1 permettent une fabrication aisée et notamment les orifices peuvent par exemple être obtenus par perçage au moyen d'un procédé par électro-érosion, ou par laser, ou mixte.

Un deuxième mode de réalisation peut être envisagé pour l'invention, dans son application aux aubes d'une roue mobile de turbine, notamment lorsque la roue de turbine, en suivant le sens normal d'écoulement des gaz dans une turbomachine, se trouve placée derrière le distributeur fixe de turbine qui reçoit les gaz sortant de la chambre de combustion et se trouve donc également soumise à des température très élevées. Il en découle un besoin de refroidir également de façon optimale les aubes de roue mobile et notamment la partie la plus sollicitée des aubes constituée par le bord d'attaque, afin d'assurer une durée de vie satisfaisante desdites aubes.

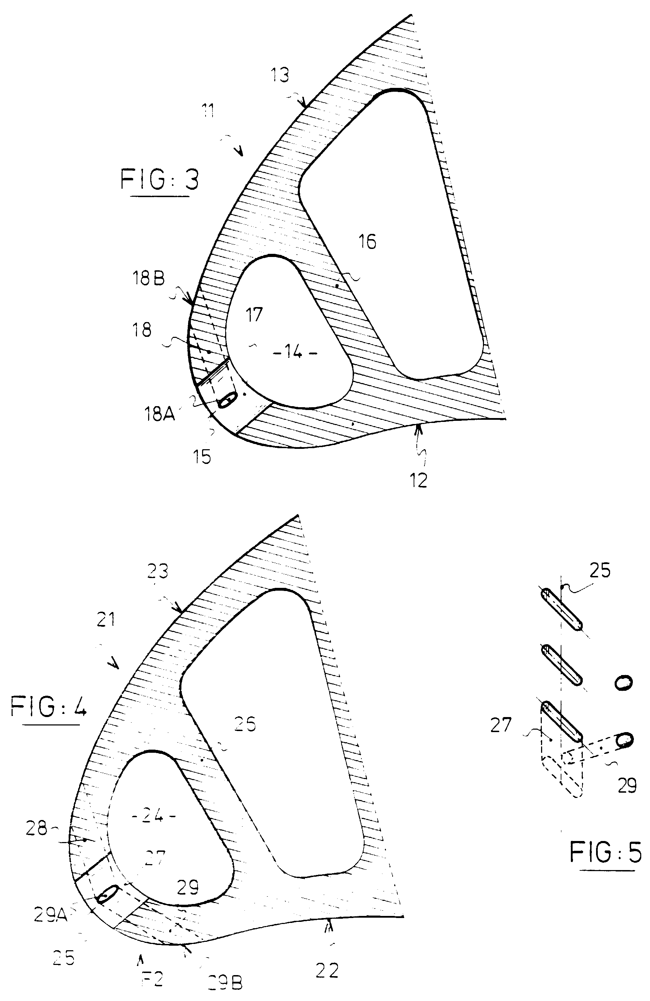

Dans un premier exemple de cette application aux aubes mobiles représenté sur la figure 3, une aube mobile 11 dont seule la partie avant a été représentée comporte, de manière connue en soi, une paroi extérieure dont la face d'intrados 12 et la face d'extrados 13 se rejoignent sur le bord d'attaque de l'aube désigné sur la figure 3 par sa ligne centrale 15 ou ligne géométrique théorique de séparation entre les flux de gaz s'écoulant d'une part sur la surface d'intrados 12 et d'autre part sur la surface d'extrados 13. L'aube 11 est évidée et comporte une première cavité longitudinale interne 14 aménagée à l'arrière du bord d'attaque et séparée de la cavité voisine par une cloison interne 16. Ces cavités permettent la circulation d'air de refroidissement, selon des techniques connues en soi, une alimentation en air étant notamment prévue par le pied de l'aube. De manière également connue, une première rangée de fentes ou orifices 17, disposés et régulièrement répartis le long de la ligne centrale 15 du bord d'attaque de l'aube 11, permettent d'évacuer l'air circulant dans ladite première cavité 14 tout en assurant le refroidissement du bord d'attaque.

De préférence, les orifices 17 présentent une section transversale de forme oblongue et leur inclinaison permet une circulation d'air dans le sens du bas vers le haut, bas et haut désignant respectivement le côté pied et le côté tête de l'aube mobile 11.

De manière remarquable et conforme à l'invention, une deuxième rangée d'orifices 18 est adjointe dans la zone de bord d'attaque de l'aube. Chaque orifice 18, disposé dans l'épaisseur de paroi externe de l'aube 11, est sécant avec un orifice 17 à une première extrémité 18A et débouche sur la face externe d'extrados 3 de l'aube 11, à son autre extrémité 18B.

Le fonctionnement et les avantages précédemment décrits pour l'aube fixe 1 de distributeur en référence aux figures 1 et 2 se retrouvent de manière analogue pour l'aube mobile 11 et notamment l'amélioration du refroidissement du bord d'attaque de l'aube due aux orifices sécants 18.

Selon la variante de réalisation, représentée sur les figures 4 et 5, une aube mobile 21 de turbine, similaire à l'aube mobile 11 représentée sur la figure 3, comporte de manière analogue, un bord d'attaque à ligne centrale 25 reliant une face d'intrados 22 et une face d'extrados 23 et comportant une première rangée d'orifices 27, ouverts sur une première cavité interne longitudinale 24, bordée par une cloison 26.

De même manière remarquable et conforme à l'invention, l'aube mobile 21 comporte une deuxième rangée d'orifices 28, chaque orifice, comme précédemment étant sécant avec un orifice 27 de la première rangée. En outre, l'aube mobile 21 comporte une autre rangée d'orifices 29. Chaque orifice 29, disposé dans l'épaisseur de paroi externe, dans la zone de bord d'attaque de l'aube 21, est sécant avec un orifice 27 à une première extrémité 29A et débouche sur la face externe d'intrados 22 de l'aube 21, à son autre extrémité 29B.

Ainsi chaque orifice 27 de la première rangée alimente en air de refroidissement respectivement un orifice 28 et un orifice 29 de deuxièmes rangées. L'amélioration du refroidissement du bord d'attaque de l'aube due aux orifices sécants 28 et 29 ainsi que le fonctionnement général et les avantages obtenus sont à nouveau dans ce cas similaires à ceux qui ont été précédemment décrits dans les autres exemples de l'invention.

## Revendications

1. Aube de turbine, notamment destinée à un turboréacteur, comprenant au moins une cavité interne parcourue par de l'air de refroidissement et une paroi externe délimitant un bord d'attaque qui comporte une ligne centrale (5 ; 15 ; 25), une face d'intrados (2 ; 12 ; 22) et une face d'extrados (3 ; 13 ; 23) de l'aube et comportant des rangées d'orifices d'évacuation de l'air de refroidissement dont au moins une première rangée d'orifices (6,7 ; 17 ; 27) est disposée dans la zone de bord d'attaque de l'aube, chaque orifice (6,7 ; 17 ; 27) communiquant avec une première cavité longitudinale interne (4 ; 14 ; 24) au moins une deuxième rangée d'orifices (8,9 ; 18 ; 28,29) étant ménagée dans la zone de bord d'attaque de l'aube (1 ; 11 ; 21), parallèle à la ligne centrale (5 ; 15 ; 25) du bord d'attaque, caractérisée en ce que chaque orifice (8,9 ; 18 ; 28 ; 29) de deuxième rangée a une première extrémité (8A,9A ; 18A ; 29A) en communication avec un orifice (6,7 ; 17 ; 27) de première rangée, la communication étant disposée entre les deux extrémités de l'orifice (6,7 ; 17 ; 27 ; 8,9 ; 18 ; 28 ; 29) de première rangée, et a une deuxième extrémité (8B, 9B ; 18B ; 29B) débouchant sur la surface externe de l'aube (1 ; 11 ; 21), les orifices (6,7 ; 17 ; 27 ; 8,9 ;18 ; 28 ; 29) de première et deuxième rangées étant ainsi respectivement sécants deux à deux de manière que l'air de refroidissement prélevé dans la première cavité interne longitudinale (4 ; 14 ; 24) de l'aube (1 ; 11 ; 21) alimente les orifices (6,7 ; 17 ; 27) de première rangée et de l'air prélevé dans lesdits orifices (6,7 ; 17 ; 27) de première rangée circule dans les orifices (8,9 ; 18 ; 28 ; 29) de deuxième rangée.

2. Aube de turbine selon la revendication 1 dans laquelle lesdits orifices (8,9 ; 18 ; 28 ; 29) sécants de deuxième rangée présentent une section circulaire.

3. Aube de turbine selon la revendication 1 dans laquelle lesdits orifices (8,9 ; 18 ; 28 ; 29) sécants de deuxième rangée présentent une section de forme oblongue.

4. Aube de turbine selon l'une quelconque des revendications 1 à 3 dans laquelle lesdits orifices (8,9 ; 18 ; 28 ; 29) sécants de deuxième rangée présentent une section constante.

5. Aube de turbine selon l'une quelconque des revendications 1 à 3 dans laquelle lesdits orifices (8,9 ; 18 ; 28 ; 29) sécants de deuxième rangée présentent une section croissante à partir de leur extrémité interne (8A,9A ; 18A ; 29A) jusqu'à leur extrémité externe (8B,9B ; 18B ; 29B).

6. Aube de turbine selon l'une quelconque des revendications 1 à 5 dans laquelle chaque orifice (8,9 ; 18 ; 28 ; 29) de deuxième rangée présente un angle d'inclinaison par rapport à la ligne centrale (5 ; 15 ; 25) de bord d'attaque de l'aube (1 ; 11 ; 21).

7. Aube de turbine selon l'une quelconque des revendications 1 à 6 destiné à un distributeur fixe dans laquelle deux deuxièmes rangées d'orifices sécants (8,9) sont disposées de part et d'autre de deux premières rangées d'orifices (6,7), les orifices étant sécants par groupe de deux (6-7, 7-9), l'un (8,9) d'une deuxième rangée et l'autre (6,7) d'une première rangée, de part et d'autre de la ligne centrale (5) du bord d'attaque, respectivement.

8. Aube de turbine selon l'une quelconque des revendications 1 à 6 destinée à une roue mobile dans laquelle une deuxième rangée unique d'orifices sécants (18) est disposée dans la zone de bord d'attaque de l'aube (11), chaque orifice (18) étant sécant avec un orifice (17) d'une première rangée unique centrée sur la ligne centrale (15) de bord d'attaque.

9. Aube de turbine selon l'une quelconque des revendications 1 à 6 destinée à une roue mobile dans laquelle deux deuxièmes rangées d'orifices sécants (28, 29) sont disposées de part et d'autre d'une première rangée unique d'orifices (27) centrée sur la ligne centrale (25) de bord d'attaque, chaque orifice (27) de première rangée communiquant avec deux orifices sécants (28, 29) chacun (28, 29) respectivement situé sur l'une des deux deuxièmes rangées.

## Claims

1. Turbine blade, in particular intended for a turbojet engine, comprising at least one internal cavity, through which the cooling air passes, and an outer wall delimiting a leading edge which includes a central line (5 ; 15 ; 25), a lower face (2 ; 12 ; 22) and an upper face (3 ; 13 ; 23) of the blade, and including rows of orifices for a cooling-air outlet, of which at least a first row of orifices (6,7 ; 17 ; 27) is arranged in the leading-edge region of the blade, each orifice (6,7; 17; 27) communicating with a first longitudinal internal cavity (4 ; 14 ; 24), at least a second row of orifices (8,9 ; 18 ; 28,29) being formed in the leading-edge region of the blade (1 ; 11 ; 21), parallel to the central line (5 ; 15 ; 25) of the leading edge, characterized in that each second-row orifice (8,9 ; 18 ; 28 ; 29) has a first end (8A,9A ; 18A ;29A) communicating with a first-row orifice (6,7 ; 17 ; 27), the communication being arranged between the two ends of the first-row orifice (6,7 ; 17 ; 27 ; 8,9 ; 18 ; 28 ; 29), and has a second end (8B, 9B ; 18B ; 29B) opening on the outer surface of the blade (1 ; 11 ; 21), the first-row and second-row orifices (6,7 ; 17 ; 27 ; 8,9 ;18 ; 28 ; 29) being thus respectively secant in pairs, so that the cooling air drawn from the first longitudinal internal cavity (4 ; 14 ; 24) of the blade (1 ; 11 ; 21) feeds the first-row orifices (6,7 ; 17 ; 27), and air drawn from the said first-row orifices (6,7 ; 17 ; 27) circulates in the second-row orifices (8,9 ; 18 ; 28 ; 29).

2. Turbine blade according to Claim 1, in which the said secant second-row orifices (8,9 ; 18 ; 28 ; 29) have a circular cross-section.

3. Turbine blade according to Claim 1, in which the said secant second-row orifices (8,9 ; 18 ; 28 ; 29) have a cross-section of oblong shape.

4. Turbine blade according to any one of Claims 1 to 3, in which the said secant second-row orifices (8,9 ; 18 ; 28 ; 29) have a constant cross-section.

5. Turbine blade according to any one of Claims 1 to 3, in which the said secant second-row orifices (8,9 ; 18 ; 28 ; 29) have a cross-section which increases from their inner end (8A,9A ; 18A ; 29A) to their outer end (8B,9B ; 18B ; 29B).

6. Turbine blade according to any one of Claims 1 to 5, in which each second-row orifice (8,9 ; 18 ; 28 ; 29) has an angle of inclination with respect to the leading-edge central line (5 ; 15 ; 25) of the blade (1 ;11 ; 21).

7. Turbine blade according to any one of Claims 1 to 6, intended for a stator, in which two second rows of secant orifices (8,9) are arranged on either side of two first rows of orifices (6,7), the orifices being secant in groups of two (6-7, 7-9), one (8,9) of a second row and the other (6,7) of a first row, on either side of the central line (5) of the leading edge, respectively.

8. Turbine blade according to any one of Claims 1 to 6, intended for a rotor disc, in which a single second row of secant orifices (18) is arranged in the leading-edge region of the blade (11), each orifice (18) being secant with an orifice (17) of a single first row which is centred on the leading-edge central line (15).

9. Turbine blade according to one of Claims 1 to 6, intended for a rotor disc, in which two second rows of secant orifices (28, 29) are arranged on either side of a single first row of orifices (27) which is centred on the leading-edge central line (25), each first-row orifice (27) communicating with two secant orifices (28, 29), each (28, 29) respectively located on one of the two second rows.

## Patentansprüche

1. Turbinenschaufel, insbesondere für ein Turbinenstrahl-Triebwerk, mit zumindest einem inneren, von Kühlluft umflossenen Hohlraum und einer Außenwand, die eine eine Mittellinie (5; 15; 25) aufweisende Vorderkante, eine Schaufelunterseite (2; 12; 22) und eine Schaufeloberseite (3; 13; 23) begrenzt und Reihen von Kühlluft-Auslaßöffnungen aufweist, von denen zumindest eine erste Reihe von Öffnungen (6, 7; 17; 27) im Bereich der Vorderkante der Schaufel angeordnet ist, wobei jede Öffnung (6, 7; 17; 27) mit einem ersten inneren longitudinalen Hohlraum (4; 14; 24) in Verbindung steht und zumindest eine zweite Reihe von Öffnungen (8, 9; 18; 28, 29) im Bereich der Vorderkante der Schaufel (1; 11; 21) parallel zur Mittellinie (5; 15; 25) der Vorderkante angeordnet ist, dadurch gekennzeichnet, daß jede Öffnung (8, 9; 18; 28, 29) der zweiten Reihe ein erstes Ende (8A, 9A; 18A; 29A), das mit einer Öffnung (6, 7; 17; 27) der ersten Reihe in Verbindung steht, wobei die Verbindung zwischen den zwei Enden der Öffnung (6, 7; 17; 27; 8, 9; 18; 28; 29) des ersten Bereiches besteht, und ein zweites Ende (8B, 9B; 18B; 29B) aufweist, das in die Außenfläche der Schaufel (1; 11; 21) mündet, wobei die Öffnungen (6, 7; 17; 27) der ersten und der zweiten Reihe sich weiterhin jeweils zu zweien dergestalt schneiden, daß dem ersten inneren longitudinalen Hohlraum (4; 14; 24) der Schaufel (1; 11; 21) entnommene Kühlluft die Öffnungen (6, 7; 17; 27) der ersten Reihe versorgt und diesen Öffnungen (6, 7; 17; 27) der ersten Reihe entnommene Luft in die Öffnungen (8, 9; 18; 28; 29) der zweiten Reihe strömt.

2. Turbinenschaufel gemäß Anspruch 1,
in der die schneidenden Öffnungen (8, 9; 18; 28; 29) der zweiten Reihe einen kreisförmigen Querschnitt aufweisen.

3. Turbinenschaufel gemäß Anspruch 1,
in der die schneidenden Öffnungen (8, 9; 18; 28; 29) der zweiten Reihe einen länglichen. Querschnitt aufweisen.

4. Turbinenschaufel gemäß einem der Ansprüche 1 bis 3,
in der die schneidenden Öffnungen (8, 9; 18; 28; 29) der zweiten Reihe einen konstanten Querschnitt aufweisen.

5. Turbinenschaufel gemäß einem der Ansprüche 1 bis 3,
in der die schneidenden Öffnungen (8, 9; 18; 28; 29) der zweiten Reihe von ihrem inneren Ende (8A, 9A; 18A; 29A) bis zu ihrem äußeren Ende (8B, 9B; 18B, 29B) einen zunehmenden Querschnitt aufweisen.

6. Turbinenschaufel gemäß einem der Ansprüche 1 bis 5,
in der jede Öffnung (8, 9; 18; 28; 29) des zweiten Bereiches einen Neigungswinkel in Bezug auf die Mittellinie (5; 15; 25) der Vorderkante der Schaufel (1; 11 ; 21) aufweist.

7. Turbinenschaufel gemäß einem der Ansprüche 1 bis 6 für einen ortsfesten Verteiler, in der zwei zweite Reihen von schneidenden Öffnungen (8, 9) zu beiden Seiten zweier erster Reihen von Öffnungen (6, 7) angeordnet sind, wobei die Öffnungen sich in Zweiergruppen (6-8, 7-9), wobei die eine (8, 9) zu einer zweiten Reihe und die andere (6, 7) zu einer ersten Reihe gehört, jeweils auf beiden Seiten der Mittellinie (5) der Vorderkante schneiden.

8. Turbinenschaufel gemäß einem der Ansprüche 1 bis 6 für ein Laufrad, in der eine einzige zweite Reihe von schneidenden Öffnungen (18) im Bereich der Vorderkante der Schaufel (11) angeordnet ist, wobei sich jede Öffnung (18) mit einer Öffnung (17) einer einzigen ersten Reihe schneidet, die auf die Mittellinie (15) der Vorderkante zentriert ist.

9. Turbinenschaufel gemäß einem der Ansprüche 1 bis 6 für ein Laufrad, in der zwei zweite Reihen von schneidenden Öffnungen (28, 29) zu beiden Seiten einer einzigen ersten Reihe von Öffnungen (27) angeordnet sind, die auf die Mittellinie (25) der Vorderkante zentriert sind, wobei jede Öffnüng (27) der ersten Reihe mit zwei schneidenden Öffnungen (28, 29) in Verbindung steht, von denen jede (28, 29) jeweils in einer der zwei zweiten Reihen angeordnet ist.
